# EUROPÄISCHE PATENTSCHRIFT

(11) **EP 1 056 631 B1**
(45) Veröffentlichungstag und Bekanntmachung des Hinweises auf die Patenterteilung: **02.10.2002**
(21) Anmeldenummer: 98966150.9
(22) Anmeldetag: 18.11.1998
(51) Int. Cl.: B60T 8/36, F16K 31/06

(54) **MAGNETVENTIL FÜR EINE SCHLUPFGEREGELTE, HYDRAULISCHE FAHRZEUGBREMSANLAGE**
MAGNETIC VALVE FOR SLIP-CONTROL HYDRAULIC BRAKING SYSTEMS IN VEHICLES
ELECTROVANNE POUR INSTALLATION DE FREINAGE HYDRAULIQUE A REGULATION ANTIPATINAGE POUR VEHICULES

(30) Priorität: 20.02.1998 DE 19807130
(43) Veröffentlichungstag der Anmeldung: 06.12.2000
(73) Patentinhaber: ROBERT BOSCH GMBH, 70442 Stuttgart (DE)
(72) Erfinder: FRITSCH, Siegfried, D-87527 Sonthofen (DE); KIRSCHNER, Martin, D-87549 Rettenberg (DE); ZIMMERMANN, Peter, D-87527 Sonthofen-Altstädten (DE)
(86) Internationale Anmeldenummer: DE9803400
(87) Internationale Veröffentlichungsnummer: WO99042348

(56) Entgegenhaltungen:
- EP-A- 0 675 030
- WO-A-98/09855
- WO-A-98/09856
- DE-A- 4 030 971
- DE-A- 19 700 495
- US-A- 4 610 428
- US-A- 5 423 602

## Beschreibung

### Stand der Technik

Die Erfindung geht aus von einem Magnetventil nach der Gattung des Patentanspruchs 1, das zum Einsetzen in eine Aufnahmebohrung in einem Hydraulikblock einer schlupfgeregelten, hydraulischen Fahrzeugbremsanlage vorgesehen ist. Das Magnetventil ist insbesondere als ein einem Radbremszylinder nachgeschaltetes, dem Radbremszylinder und einer Saugseite einer Rückförderpumpe zwischengeschaltetes Radbremsdruckabsenkventil vorgesehen.

Ein derartiges Magnetventil ist aus DE 197 00 495 A1 bekannt. Dort ist der rohrförmige Ventildom an seinem offenen Ende mit einer hohlkegelförmigen oder ringstufenförmigen Erweiterung ausgestattet, mit welcher er einen passend ausgebildeten Bund des Ventilträgers übergreift. Der Ventildom und der Ventilträger sind durch einen mittels des Werkstoffs des Hydraulikblocks erzeugte erste Verstemmung, die an der Erweiterung des Ventildoms angreift, in der Aufnahmebohrung des Hydraulikblocks befestigt. Auf den Ventildom ist außerdem ein an der ersten Verstemmung abgestütztes, ringförmiges Bauteil aufgeschoben, das mit einer zweiten Verstemmung des Hydraulikblocks mündungsseitig in der Aufnahmebohrung befestigt ist. Der hülsenförmig ausgebildete Ventilträger ist einstückig mit einem Ventilsitz für den Angriff eines ankerbetätigten Ventilschließkörpers sowie mit einer bodenseitigen Ringschneide versehen, welche am Grund der Aufnahmebohrung in den Werkstoff des Hydraulikblocks eingegraben ist und einen radial im Hydraulikblock und im Ventilträger verlaufenden Ventileinlaß von einem axial verlaufenden Ventilauslaß des Hydraulikblocks trennt. Durch die Verstemmungen und die Ringschneiddichtung sind elastomere Dichtelemente entbehrlich. Allerdings ist die Montage des Magnetventils aufgrund der nacheinander erfolgenden Verstemmungen relativ aufwendig.

Aus US 4 610 428 ist ein Magnetventil mit einem Ventildom bekannt, der an seinem offenen Ende eine ringstufenförmige Erweiterung hat. Diese liegt in einer komplementär gestalteten Stufe eines als Ventilträger dienenden Blechformteils ein. In die ringstufenförmige Erweiterung des Ventildoms greift unter Zwischenlage eines Dichtungsringes ein Bund eines im Ventildom angeordneten Ventilsitzteils ein. Der Ventilträger ist keiner Belastung durch ein Fluid ausgesetzt und übt daher keine Abdichtfunktion aus. Er dient lediglich der Befestigung des Magnetventils außen an einem Ventilblock.

Ein aus US 5 423 602 bekanntes Magnetventil weist einen hinterschnittfreien Ventilträger auf, in dem ein Ventilsitzteil mit Preßsitz aufgenommen ist. Ein vom Ventilsitzteil abgewandt angeformter Ansatz des Ventilträgers ist vom offenen Ende eines Ventildoms fluiddicht übergriffen.

Ferner ist aus DE 40 30 971 A1 ein Magnetventil mit einem Ventilträger bekannt, welcher einen Ansatz aufweist, der vom offenen Ende eines Ventildoms übergriffen und mit diesem fluiddicht verschweißt ist.

Ein aus EP 0 675 030 A2 bekanntes Magnetventil weist einen hohlzylindrischen Ventildom auf, in den ein zylindrisches Polstück eingesetzt und in dem ein Anker axial verschiebbar aufgenommen ist. Zur Betätigung des Magnetventils ist eine Spule auf den Ventildom aufgesetzt. Das bekannte Magnetventil ist stromlos geschlossen; mit seinem Anker ist ein Ventilschließkörper gegen die Kraft einer Ventilschließfeder von einem Ventilsitz abhebbar. Bei Ausbildung des bekannten Magnetventils als stromlos offenes Ventil wäre der Ventilschließkörper mit dem Anker gegen die Kraft einer Ventilöffnungsfeder gegen den Ventilsitz drückbar. Der Ventilsitz ist an einem Ventilsitzteil ausgebildet, das fluchtend auf einer offenen Stirnseite des Ventildoms angeordnet ist.

Zur Befestigung des Magnetventils in der Aufnahmebohrung des Hydraulikblocks ist ein kreisringförmiger Ventilträger vorgesehen, in den der Ventildom mit seiner offenen Stirnseite eingreift. Die Befestigung des Magnetventils in der Aufnahmebohrung des Hydraulikblocks erfolgt mit einer Befestigungsplatte, in der ein Loch mit dem Durchmesser des Ventildoms angebracht ist, durch das der Ventildom durchgesteckt ist, wobei die Befestigungsplatte zwischen dem Ventilträger und der Spule eingespannt ist. Die Befestigungsplatte ist am Ventilblock angebracht und hält das Magnetventil am Ventilträger in der Aufnahmebohrung.

Zur Abdichtung zwischen dem Ventilträger und dem Ventildom ist ein Dichtring in eine umlaufende Innennut im kreisringförmigen Ventilträger eingelegt. Die Abdichtung zwischen Ventilträger und einer Wandung der Aufnahmebohrung erfolgt mit einem Dichtring, der in einer Ringstufe des Ventilträgers einliegt. Zur Abdichtung zwischen dem Ventilsitzteil und der Aufnahmebohrung ist ebenfalls ein Dichtring vorgesehen, der in eine umlaufende Nut am Umfang des Ventilsitzteils beziehungsweise eines Ventilsitzteilhalters eingelegt ist, in den das Ventilsitzteil eingepreßt ist. Ein Ventileinlaß erfolgt durch Radialbohrungen, die im Ventilträger und im Ventilsitzteilhalter angebracht sind und auf einer dem Anker zugewandten Stirnseite des Ventilsitzteils münden.

Das bekannte Magnetventil hat den Nachteil, daß seine Herstellung aufwendig ist, da sowohl der Ventilträger als auch der Ventilsitzteilhalter mit ihren Nuten und Stufungen für die Dichtringe und den Querbohrungen für den Ventileinlaß aufwendig durch spanende Bearbeitung hergestellt werden müssen, und daß die Montage mit der zwischen dem Ventilträger und der Spule eingespannten und am Hydraulikblock anzubringenden Befestigungsplatte aufwendig ist.

### Vorteile der Erfindung

Das erfindungsgemäße Magnetventil mit den Merkmalen des Anspruchs 1 hat den Vorteil, daß die Verbindung des Ventildoms mit dem Ventilträger und auch die Verbindung des Ventilsitzteils mit dem Ventildom kraft- und/oder formschlüssig durch einen Umformvorgang wie Bördeln oder Verstemmen des Ventilträgers erfolgen. Durch diese Art der Verbindung des Ventildoms, des Ventilsitzteils und des Ventilträgers miteinander erfolgt zugleich auch die Abdichtung zwischen diesen Teilen, ohne daß ein Dichtelement notwendig ist. Dies erspart sowohl die Kosten des Dichtelements als auch den Montageaufwand für die Anbringung des Dichtelements. Weiterer Vorteil des erfindungsgemäßen Magnetventils ist die Möglichkeit, dieses aufgrund der Verbindung und Abdichtung des Ventildoms, des Ventilsitzteils und des Ventilträgers in axialer Richtung kurzbauend ausbilden zu können.

Die Unteransprüche haben vorteilhafte Ausgestaltungen und Weiterbildungen der im Anspruch 1 angegebenen Erfindung zum Gegenstand.

Bei einer Ausgestaltung der Erfindung gemäß Anspruch 4 erfolgt ein Ventileinlaß und ein Ventilauslaß beispielsweise axial oder achsparallel durch die offene Stirnseite des Ventildoms hindurch. Auf diese Weise erübrigt sich die Anbringung eines Querlochs im Ventildom, im Ventilträger, im Ventilsitzteil oder im Ventilsitzteilhalter, was eine erhebliche Vereinfachung der Herstellung des Magnetventils bedeutet, da die Anbringung eines solchen Querlochs schwierig und infolgedessen aufwendig ist.

### Zeichnung

Die Erfindung wird nachstehend anhand eines in der Zeichnung dargestellten Ausführungsbeispiels näher erläutert. Es zeigen:

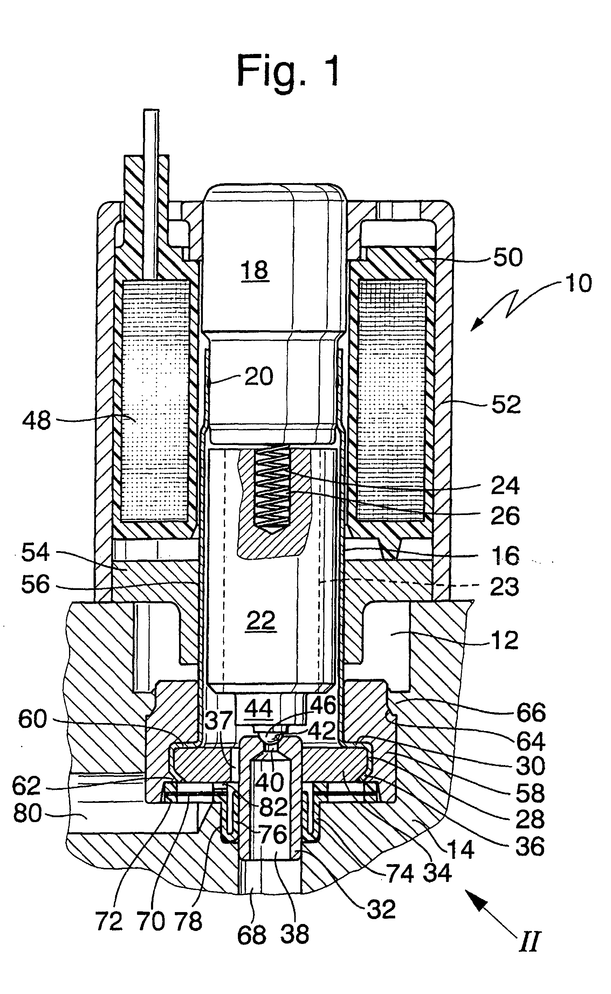

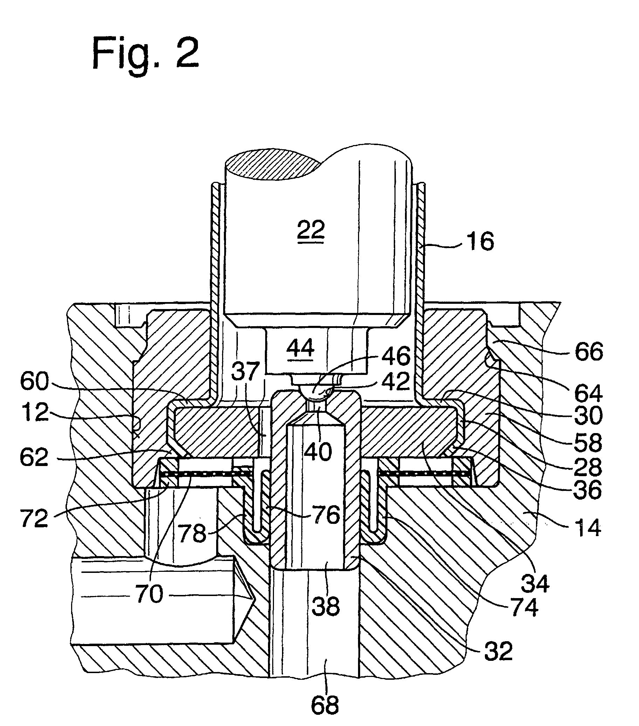

Figur 1 einen Achsschnitt eines erfindungsgemäßen Magnetventils und Figur 2 eine vergrößerte Einzelheitdarstellung gemäß Pfeil II in Figur 1.

### Beschreibung des Ausführungsbeispiels

Das in der Zeichnung dargestellte, erfindungsgemäße Magnetventil 10 ist ein rotationssymmetrisches, in seiner stromlosen Grundstellung geschlossenes 2/2-Wegeventil. Es ist in eine gestufte Aufnahmebohrung 12 in einem Hydraulikblock 14 eingesetzt. Der Hydraulikblock 14, von dem in der Zeichnung lediglich ein Bruchstück im Bereich der Aufnahmebohrung 12 dargestellt ist, ist Teil einer im übrigen nicht dargestellten Schlupfregeleinrichtung einer Fahrzeugbremsanlage. In den Hydraulikblock 14 sind weitere, nicht dargestellte hydraulische Bauelemente wie Magnetventile und Hydropumpen eingesetzt und hydraulisch miteinander verschaltet.

Das erfindungsgemäße Magnetventil 10 weist als Ventildom 16 ein zylindrisches Rohr auf, dessen eines Stirnende mit einem massiven, zylindrischen Polstück 18 verschlossen ist, das mit dem Ventildom 16 durch eine umlaufende Schweißung 20 druckfest und fluiddicht verschlossen ist. An das Polstück 18 anschließend ist ein zylindrischer Anker 22 axial verschieblich im Ventildom 16 aufgenommen. Eine Ventilschließfeder 24 in Form einer Schraubendruckfeder, die in ein axiales Sackloch 26 im Anker 22 eingesetzt ist, drückt den Anker 22 vom Polstück 18 ab.

Der Anker 22 ist mit durchgehenden Längsnuten 23 versehen, die ein Vorbeiströmen von Fluid ermöglichen, um den Bewegungswiderstand des Ankers 22 beim Betätigen den Magnetventils 10 niedrig zu halten.

An einer dem Polstück 18 abgewandten, offenen Stirnseite 28 erweitert sich der Ventildom 16 mit einer durch Umformen hergestellten Ringstufe 30. In der offenen Stirnseite 28 des Ventildoms 16 ist ein Ventilsitzteil 32 angeordnet. Das Ventilsitzteil 32 ist zylindrisch mit erheblich kleinerem Durchmesser als der Ventildom 16. Es ist in einen Iochscheibenförmigen Ventilsitzteilhalter 34 eingepreßt, der in der Ringstufe 30 an der offenen Stirnseite 28 des Ventildoms 16 einliegt. Durch einen schräg nach innen gerichteten Bördel 36 an der offenen Stirnseite 28 des Ventildoms 16 ist der Ventilsitzteilhalter 34 mit dem Ventilsitzteil 32 in der offenen Stirnseite 28 des Ventildoms 16 gehalten. Der lochscheibenförmige Ventilsitzteilhalter 34 ist ein einfach herstellbares, preisgünstiges Standardteil.

Das Ventilsitzteil 32 ist mit einem axialen Durchgangsloch 38 versehen, das eine Engstelle als Drosselstelle 40 an einem dem Anker 22 zugewandten Ende aufweist und mit einem konischen Ventilsitz 42 zum Anker 22 hin mündet. Das Durchgangsloch 38 mit der Drosselstelle 40 bildet einen Ventilauslaß. Das Ventilsitzteil 32 weist keine Hinterschneidung auf, es ist durch Kaltschlagen, also durch ein Umformverfahren, schnell und preisgünstig hergestellt. Der Ventilsitz 42 kann nach dem Kaltschlagen geprägt werden, um eine Materialverfestigung zu erzielen und seine Verschleißfestigkeit zu erhöhen. Das Ventilsitzteil 32 kann auch einstückig mit dem Ventilsitzteilhalter 34 hergestellt sein.

An seinem dem Ventilsitzteil 32 zugewandten Stirnende verjüngt sich der Anker 22 mit zwei Ringstufen. In das verjüngte Ende 44 ist eine gehärtete Kugel als Ventilschließkörper 46 eingepreßt, die mit dem Ventilsitz 42 zusammen wirkt. Der Anker 22 wird mit dem ihm eingepreßten Ventilschließkörper 46 von der Ventilschließfeder 24 gegen den Ventilsitz 42 gedrückt, d. h. das Magentventil 10 ist in seiner stromlosen Grundstellung geschlossen.

Zum Öffnen des Magnetventils 10 ist eine den Ventildom 16 und das Polstück 18 umschließende Spule 48 auf das Magentventil 10 aufgeschoben. Durch Bestromung der Spule 48 wird der Anker 22 gegen die Kraft der Ventilschließfeder 24 an das Polstück 18 angezogen und auf diese Weise der Ventilschließkörper 46 vom Ventilsitz 42 abgehoben, das Magentventil 10 ist in seiner bestromten Schaltstellung offen. Die Spule 48 ist mit einem Kunststoffisolator 50 umgossen und in ein topfförmiges Joch 52 eingesetzt, das einen Magnetkreis des Magnetventils 10 an einem freien Stirnende des Polstücks 18 schließt. In ein dem Hydraulikblock 14 zugewandtes Stirnende des Jochs 52 ist eine Jochscheibe 54 mit einem Mittelloch 56 eingesetzt, die vom Ventildom 16 durchgriffen wird. Mit der Jochscheibe 54 wird auch auf der Seite des Ankers 22 der Magnetkreis des Magnetventils 10 weitgehend geschlossen.

Der lochscheibenförmige Ventilsitzteilhalter 34 weist an einer Stelle seines Innenumfangs, also am Außenumfang des Ventilsitzteils 32, eine achsparallel durchgehende Längsnut 37 auf, die Teil eines Ventileinlasses ist. Diese Längsnut 37 bildet eine Drosselstelle. Ventileinlaß 37 und Ventilauslaß 38, 40 erfolgen also durch die offene Stirnseite 28 des Ventildoms 16 hindurch, so daß kein Querloch in der Umfangswand des Ventildoms 16 oder in einem anderen Teil des Magnetventils 10 für den Ventilein- oder -auslaß notwendig ist, was die Herstellung des Magnetventils 10 erleichtert.

Zum Anbringen des Magnetventils 10 in der Aufnahmebohrung 12 des Hydraulikblocks 14 weist das Magnetventil 10 einen kreisringförmigen Ventilträger 58 auf, der auf den Ventildom 16 aufgesteckt ist. Der Ventilträger 58 weist eine Ringstufe 60 an seiner Innenseite auf, in der die Ringstufe 30 des Ventildoms 16 und in dieser der Ventilsitzteilhalter 34 einliegen. Durch eine Preßpassung zwischen dem Ventilträger 58, dem erweiterten Ende des Ventildoms 16 und dem Ventilsitzteilhalter 34 sind diese Teile mechanisch miteinander verbunden und druckfest abgedichtet. Es besteht also ein Kraftschluß zwischen dem Ventilträger 58, dem Ventildom 16 und dem Ventilsitzteilhalter 34. Die Preßpassung zwischen dem Ventildom 16 und dem Ventilsitzteilhalter 34 kann durch Aufpressen des Ventilträgers 58 auf den Ventildom 16 bewirkt sein, es muß also nicht in jedem Fall eine Preßpassung zwischen dem Ventilsitzteilhalter 34 und dem Ventildom 16 bestehen, solange der Ventilträger 58 noch nicht aufgepreßt ist. Eine umlaufende Verstemmung 62 des Ventilträgers 58 verbessert die mechanische Verbindung und die druckfeste Abdichtung zwischen dem Ventilträger 58, dem Ventildom 16 und dem Ventilsitzteilhalter 34. Die Verstemmung 62 bewirkt zusätzlich einen Formschluß zum Kraftschluß.

An seinem Außenumfang weist der Ventilträger 58 ebenfalls eine Ringstufe 64 auf, an der er und zusammen mit ihm das gesamte Magnetventil 10 durch eine umlaufende Verstemmung 66 des Hydraulikblocks 14 in der Aufnahmebohrung 12 des Hydraulikblocks 14 gehalten und druckfest abgedichtet ist. Die Verstemmung 66 wird angebracht, bevor die Spule 48 mit dem Joch 52 auf den Ventildom 16 und das Polstück 18 aufgesteckt werden.

Das Ventilsitzteil 32 steht auf einer dem Anker 22 abgewandten Seite aus dem Ventilsitzteilhalter 34 in eine axiale Auslaßbohrung 68 im Hydraulikblock 14 hinein vor. An einem Grund der gestuften Aufnahmebohrung 12 ist ein Filterelement 70 angeordnet, das die Form einer Lochscheibe 70 aufweist, das das aus dem Ventilsitzteilhalter 34 vorstehende Ventilsitzteil 32 umgibt und das beispielsweise aus einem Filtergewebe oder einem gelochten Filtersieb besteht. Das Filterelement 70 ist teilweise mit einem thermoplastischen Kunststoff umspritzt, dem vorzugsweise ca. 20% Glas- oder Kohlefaser zugesetzt sind. Das Filterelement 70 liegt in einer flachen Ansenkung des Ventilträgers 58 ein. Der thermoplastische Kunststoff des Filterelements 70 erfüllt mehrere Dichtfunktionen: Zum einen ist der thermoplastische Kunststoff als Dichtring 72 am Außenumfang des Filterelements 70 ausgebildet. Des weiteren bildet der thermoplastische Kunststoff ein ringförmiges Dichtelement 74 am Innenumfang des Iochscheibenförmigen Filterelements 70. Dieses das Ventilsitzteil 32 umschließende, ringförmige Dichtelement 74 weist einen U-förmigen Ringquerschnitt auf, dessen offene Seite dem Ventilsitzteilhalter 34 zu- und dessen geschlossene Jochseite dem Ventilsitzteilhalter 34 abgewandt ist, so daß ein Innenraum des U-förmigen Ringquerschnitts des Dichtelements 74 mit einem im Ventileintaß herrschenden Fluiddruck beaufschlagt wird. Ein innerer Schenkel 76 des U-förmigen Ringquerschnitts liegt dichtend außen am Ventilsitzteil 32, ein äußerer Schenkel 78 des U-förmigen Ringquerschnitts des Dichtelements 74 liegt dichtend innen an einer Umfangswandung der gestuften Aufnahmebohrung 12 des Hydraulikblocks 14 an. Durch die Beaufschlagung mit dem im Ventileinlaß herrschenden Druck werden die Schenkel 76, 78 des Dichtelements 74 bei steigendem Druck stärker an das Ventilsitzteil 32 und die Aufnahmebohrung 12 angedrückt, so daß die Dichtwirkung steigt und das Dichtelement 74 auch bei hohem Druck zuverlässig zwischen Ventileinlaß und Ventilauslaß abdichtet. Der Ventileinlaß erfolgt durch eine radiale Einlaßbohrung 80, die zum Filterelement 70 führt, weiter durch das Filterelement 70 und durch eine oder mehrere Radialnuten 82 im Dichtelement 74, die Drosselstellen bilden, und durch die Längsnut 37 des Ventilsitzteilhalters 34 in den Innenraum des Ventildoms 16.

## Patentansprüche

1. Magnetventil (10) zum Einsetzen in eine Aufnahmebohrung (12) eines Hydraulikblocks (14) einer schlupfgeregelten, hydraulischen Fahrzeugbremsanlage,
mit einem kreisringförmigen, hinterschnittfreien Ventilträger (58), der in die Aufnahmebohrung (12) des Hydraulikblocks (14) einsetzbar ist,
mit einem Ventildom (16), der mit einem offenen Stirnende (28) mit einer ringstufenförmigen Erweiterung (30) an dem Ventilträger (58) angreift und mit diesem durch einen Kraftschluß und/oder einen Formschluß fluiddicht verbunden ist,
mit einem Anker (22), der axial verschiebbar im Ventildom (16) aufgenommen ist,
mit einer Spule (48), die den Ventildom (16) umgreifend auf den Ventildom (16) aufgesetzt ist,
mit einem Ventilschließkörper (46), der zum Öffnen des Magnetventils (10) mit dem Anker (22) von einem Ventilsitz (42) abhebbar und/oder der zum Schließen des Magnetventils (10) mit dem Anker (22) an den Ventilsitz (42) andrückbar ist, wobei der Ventilsitz (42) an einem Ventilsitzteil (32) ausgebildet ist, das an dem Ventilträger (58) angebracht ist,
**dadurch gekennzeichnet, daß** der Ventildom (16) mit seiner ringstufenförmigen Erweiterung (30) in einer komplementären Erweiterung (60) im Ventilträger (58) einliegt,
daß in der ringstufenförmigen Erweiterung (30) des Ventildoms (16) das Ventilsitzteil (32) aufgenommen ist
und daß der Ventildom (16) und das Ventilsitzteil (32) durch Umformen des Ventilträgers (58) mit diesem fluiddicht verbunden sind.

2. Magnetventil nach Anspruch 1, **dadurch gekennzeichnet, daß** das Ventilsitzteil (32) durch einen Formschluß und/oder einen Kraftschluß innerhalb des Ventilträgers (58) fluiddicht im Ventildom (16) gehalten ist.

3. Magnetventil nach Anspruch 1 oder 2, **dadurch gekennzeichnet, daß** das Ventilsitzteil (32) ein im wesentlichen hohlzylindrisches Teil ist, das in einen lochscheibenförmigen Ventilsitzteilhalter (34) eingesetzt ist, der durch einen Formschluß und/oder einen Kraftschluß innerhalb des Ventilträgers (58) fluiddicht im Ventildom (16) gehalten ist.

4. Magnetventil nach Anspruch 1, **dadurch gekennzeichnet, daß** ein Ventileinlaß (37) und ein Ventilauslaß (38, 40) im offenen Stirnende (28) des Ventildoms (16) angeordnet sind.

5. Verwendung eines Magnetventils nach einem der vorhergehenden Ansprüche in einer schlupfgeregelten, hydraulischen Fahrzeugbremsanlage, wobei das Magnetventil (10) in eine Aufnahmebohrung (12) eines Hydraulikblocks (14) eingesetzt ist, **dadurch gekennzeichnet, daß** das Magnetventil (10) eine ringförmige Dichtung (74) aufweist, die das Ventilsitzteil (32) umschließt und die zwischen dem Ventilsitzteil (32) und der Aufnahmebohrung (12) im Hydraulikblock (14) abdichtet, und daß die Dichtung (74) einen U-förmigen Ringquerschnitt aufweist, wobei ein innerer Schenkel (76) des U-förmigen Ringquerschnitts dichtend am Ventilsitzteil (32) und ein äußerer Schenkel (78) des U-förmigen Ringquerschnitts dichtend an einer Umfangswandung der Aufnahmebohrung (12) im Hydraulikblock (14) anliegt.

6. Verwendung eines Magnetventils nach Anspruch 5, **dadurch gekennzeichnet, daß** ein Ringraum zwischen den Schenkeln (76, 78) des U-förmigen Ringquerschnitts mit dem Ventileinlaß (37, 80, 82) kommuniziert.

7. Verwendung eines Magnetventils nach Anspruch 5, **dadurch gekennzeichnet, daß** die Dichtung (74) einstückig mit einem Filterelement (70) ist.

8. Verwendung eines Magnetventils nach Anspruch 7, **dadurch gekennzeichnet, daß** das Filterelement (70) eine weitere Dichtung (72) aufweist, die zwischen dem Ventilträger (58) und der Aufnahmebohrung (12) im Hydraulikblock (14) abdichtet.

## Claims

1. Solenoid valve (10) for insertion into a receiving bore (12) of a hydraulic block (14) of a traction-controlled hydraulic vehicle brake system,
with an annular undercut-free valve carrier (58) which can be inserted into the receiving bore (12) of the hydraulic block (14), with a valve dome (16) which engages, with an open end face (28) having a widening (30) in the form of an annular step, on the valve carrier (58) and is connected, fluid-tight, to the latter by non-positive and/or positive connection,
with an armature (22) which is received axially displaceably in the valve dome (16),
with a coil (48) which is placed onto the valve dome (16) so as to surround said valve dome (16), and
with a valve-closing body (46) which, to open the solenoid valve (10), can be lifted off from a valve seat (42) by means of the armature (22) and/or which, to close the solenoid valve (10), can be pressed -on to the valve seat (42) by means of the armature (22), the valve seat (42) being formed on a valve-seat part (32) which is attached to the valve carrier (58), **characterized in that** the valve dome (16) is seated, with its widening (30) in the form of an annular step, in a complementary widening (60) in the valve carrier (58), **in that** the valve-seat part (32) is received in the widening (30), in the form of an annular step, of the valve dome (16), and **in that** the valve dome (16) and the valve-seat part (32) are connected, fluid-tight, to the valve carrier (58) as a result of the forming of the latter.

2. Solenoid valve according to Claim 1, **characterized in that** the valve-seat part (32) is held, fluid-tight, in the valve dome (16) within the valve carrier (58) by positive and/or non-positive connection.

3. Solenoid valve according to Claim 1 or 2, **characterized in that** the valve-seat part (32) is an essentially hollow-cylindrical part which is inserted into a valve-seat part holder (34) which is in the form of a perforated disc and which is held, fluid-tight, in the valve dome (16) within the valve carrier (58) by positive and/or non-positive connection.

4. Solenoid valve according to Claim 1, **characterized in that** a valve inlet (37) and a valve outlet (38, 40) are arranged in the open end face (28) of the valve dome (16).

5. Use of a solenoid valve according to one of the preceding claims in a traction-controlled hydraulic vehicle brake system, the solenoid valve (10) being inserted into a receiving bore (12) of a hydraulic block (14), **characterized in that** the solenoid valve (10) has an annular seal (74) which surrounds the valve-seat part (32) and which seals off between the valve-seat part (32) and the receiving bore (12) in the hydraulic block (14), and **in that** the seal (74) has a U-shaped annular cross section, an inner limb (76) of the U-shaped annular cross section bearing sealingly on the valve-seat part (32), and an outer limb (78) of the U-shaped annular cross section bearing sealingly on a circumferential wall of the receiving bore (12) in the hydraulic block (14).

6. Use of a solenoid valve according to Claim 5, **characterized in that** an annular space between the limbs (76, 78) of the U-shaped annular cross section communicates with the valve inlet (37, 80, 82).

7. Use of a solenoid valve according to Claim 5, **characterized in that** the seal (74) is in one piece with a filter element (70).

8. Use of a solenoid valve according to Claim 7, **characterized in that** the filter element (70) has a further seal (72) which seals off between the valve carrier (58) and the receiving bore (12) in the hydraulic block (14).

## Revendications

1. Electrovanne (10) destinée à être placée dans un perçage de réception (12) d'un bloc hydraulique (14) d'un système de frein hydraulique de véhicule à régulation de patinage, comprenant :
- un support de vanne (58) en forme d'anneau de cercle, avec un dégagement en contre-dépouille, qui se place dans le perçage de réception (12) du bloc hydraulique (14),
- un dôme de soupape (16) dont la face frontale ouverte (28) coopère par une extension (30) en forme d'anneau étagé avec le support de vanne (58) et est reliée à celui-ci par une liaison par la force et/ou par la forme d'une manière étanche au fluide,
- un induit (22) coulissant axialement dans le dôme de soupape (16),
- une bobine (48) appliquée sur le dôme de soupape (16) et entourant celui-ci,
- un corps d'obturation de soupape (46) qui peut être soulevé du siège de soupape (42) par l'induit (22) pour ouvrir l'électrovanne (10) et/ou qui est poussé contre le siège de soupape (42) par l'induit (22) pour fermer l'électrovanne (10), le siège de soupape (42) étant réalisé sur une partie de siège de soupape (32) placée dans le support de vanne (58),
**caractérisée en ce que**
le dôme de soupape (16), avec son extension (30) en forme de gradin annulaire, est logé dans une extension complémentaire (60) du support de vanne (58),
l'extension (30) en forme de gradin annulaire du dôme de soupape (16) reçoit la partie de siège de soupape (32) et
le dôme de soupape (16) et la partie formant siège de soupape (32) sont reliés de manière étanche au fluide par mise en forme du support de vanne (58).

2. Electrovanne selon la revendication 1,
**caractérisée en ce que**
la partie formant siège de soupape (32) est maintenue étanche au fluide dans le dôme de soupape (16) par une liaison par la forme et/ou par la force dans le support de vanne (58).

3. Electrovanne selon l'une quelconque des revendications 1 ou 2,
**caractérisée en ce que**
la partie formant siège de soupape (32) est une pièce essentiellement cylindrique creuse, recevant un support de partie formant siège de soupape (34), en forme de disque perforé, maintenu par une liaison par la forme et/ou par la force dans le support de vanne (58) de manière étanche au fluide dans le dôme de soupape (16).

4. Electrovanne selon la revendication 1,
**caractérisée en ce que**
l'entrée (37) et la sortie (38, 40) de l'électrovanne se trouvent dans l'extrémité frontale ouverte (28) du dôme de soupape (16).

5. Application d'une électrovanne selon l'une quelconque des revendications précédentes à un système de freinage de véhicule, hydraulique, à régulation de patinage, selon laquelle l'électrovanne (10) est placée dans un perçage de réception (12) d'un bloc hydraulique (14),
**caractérisée en ce que**
l'électrovanne (10) présente un joint (74) de forme annulaire qui entoure la partie formant siège de soupape (32) et assure l'étanchéité entre la partie formant siège de soupape (32) et le perçage de réception (12) dans le bloc hydraulique (14), et
le joint (74) a une section annulaire en forme de U dont une branche intérieure (76) de la section annulaire en forme de U est appliquée de manière étanche contre la partie formant siège de soupape (32), et dont une branche extérieure (78) de la section annulaire en forme de U est appliquée de manière étanche contre une paroi périphérique du perçage de réception (12) dans le bloc hydraulique (14).

6. Application d'une électrovanne selon la revendication 5,
**caractérisée en ce qu'**
un volume annulaire entre les branches (76, 78) de la section annulaire en forme de U communique avec l'entrée de vanne (37, 80, 82).

7. Application d'une électrovanne selon la revendication 5,
**caractérisée en ce que**
le joint (74) fait une seule pièce avec un élément de filtre (70).

8. Application d'une électrovanne selon la revendication 7,
**caractérisée en ce que**
l'élément de filtre (70) comporte un autre joint (72) assurant l'étanchéité entre le support de vanne (58) et le perçage de réception (12) dans le bloc hydraulique (14).
